# EUROPEAN PATENT SPECIFICATION

(11) **EP 2 703 574 B1**
(45) Date of publication and mention of the grant of the patent: **21.10.2015**
(21) Application number: 13182019.3
(22) Date of filing: 28.08.2013
(51) Int. Cl.: E04B 1/76, F16L 3/26, E04D 13/08

(54) **Insulating element**
Isolierelement
Élément isolant

(30) Priority: 29.08.2012 GB 201215304
(43) Date of publication of application: 05.03.2014
(73) Proprietor: Enviroform Solutions Limited, Warrenpoint Down BT34 3PN (GB)
(72) Inventor: Brown, Liam, Warrenpoint, Down BT34 3PN (GB)
(74) Representative: Waller, Stephen

(56) References cited:
- WO-A1-96/14484
- WO-A2-2009/007103
- DE-A1-102007 059 085
- DE-A1-102008 032 445
- GB-A- 2 241 466
- GB-A- 2 389 636

## Description

This invention relates to an insulating element for insulating building facades.

Insulation is added to buildings to conserve energy by preventing heat loss through floors, walls, ceilings and lofts.

With ever increasing fuel and energy costs there is a continuous drive to improve the thermal efficiency of both old and new build buildings.

It is known to attach composite insulated panels to the exterior walls (facades) of a building to improve the thermal efficiency and appearance of the building, such insulated boards typically comprising a core of thermally insulating material sandwiched between substantially rigid outer layers. A weatherproof render or other substantially weatherproof layer may be applied to or may be provided on an outer face of at least one side of the panel, preferably the side forming an exposed face of the panel.

Insulation by such external panelling is especially done in the field of modernising buildings. This solution leads to excellent heat insulation with a non-destructive intervention which is relatively rapid and economically advantageous. Further, installation is done outside of the building and therefore does not interfere with normal activities inside the building and does not reduce the internal area of the building, unlike panelling applied to the interior walls.

A problem with such external panelling is the requirement to outwardly displace down pipes and other external wall fittings to accommodate the thickness of he insulated panels, which may be up to 300mm thick. Such may require the corresponding outward displacement of gullies and/or gutters to realign the gullies and/or gutters with the outwardly displaced down pipes. An alternative solution is to cut into the insulated panels, at least at the lower and/or upper region, thereof adjacent the gully, to allow at least a portion of the down pipe to be recessed into the insulated panel to bring it into alignment with the gully and/or existing guttering. However, this can cause gaps to be formed through the insulating core of the panel, leading to cold bridging and/or moisture and/or air infiltration through such gaps. As far as is known, none of the existing heat insulating building cladding systems proposed or constructed have included a flashing member, which itself is provided with a thermal barrier or heat insulating element therein for reducing heat losses and preventing the formation of condensation or frost on the interior portion of the flashing.

WO 96/14484 discloses an insulating element according to the preamble of claim 1. It discloses a prefabricated profile for lining a cut or milled groove or channel formed in an insulating panel. Such profile provides structural and architectural benefits when it is required to form a channel in an insulating panel. However, it does not address the problem of thermal bridging due to the reduced thickness of the insulating panel in the region of such groove or channel.

According to a first aspect of the present invention there is provided an insulating element for insulating building facades as claimed in claim 1.

Preferably said insulating layer is formed from a material having a higher u value, and therefore substantially lower thickness for a given level of thermal insulation, than the insulating core of adjacent insulating panels.

In one embodiment said insulating element is provided with an end wall extending between said first and second side portions at one end of said base member. Said end wall may extend at an obtuse angle to the base member.

In an alternative embodiment said base member and side walls of the insulating element define between them an elongate channel within which an external wall fitting, such as a down pipe, may be received.

Said base member and side walls of the insulating element may be formed from plastic or steel, preferably by means of a moulding or extrusion process. At least one of the side walls may integrally formed with the base member.

In one embodiment the insulating element may be formed from two parts, a first part comprising said base member and one of said side walls and a second part comprising the other of said side walls. Preferably the second part includes a lip extending substantially perpendicularly from an inner edge of the side wall defined thereby, said lip being arrange to lie behind or in front of the base member, in use, in overlapping relationship therewith.

Embodiments of the present invention will now be described by way of example only with reference to the accompanying drawings, in which :-
Figure 1 is a perspective view of an insulating element in accordance with a first embodiment of the present invention;
Figure 2 is sectional view through an exterior wall having insulating panels of an external insulation system attached thereto incorporating the insulating element of Figure 1;
Figure 3 is a perspective view of an insulating element in accordance with a second embodiment of the present invention;
Figure 4 is a perspective view of an exterior wall having insulating panels of an external insulation system attached thereto incorporating the insulating element of Figure 3;
Figure 5a is a perspective view of a ridge track or verge trim of the system
Figure 5b is a perspective view of a starter track of the system;
Figure 6 is a transverse sectional view through an insulating element in accordance with a further embodiment of the invention, in use; and
Figure 7 is an exploded end view of the insulating element of Figure 6.

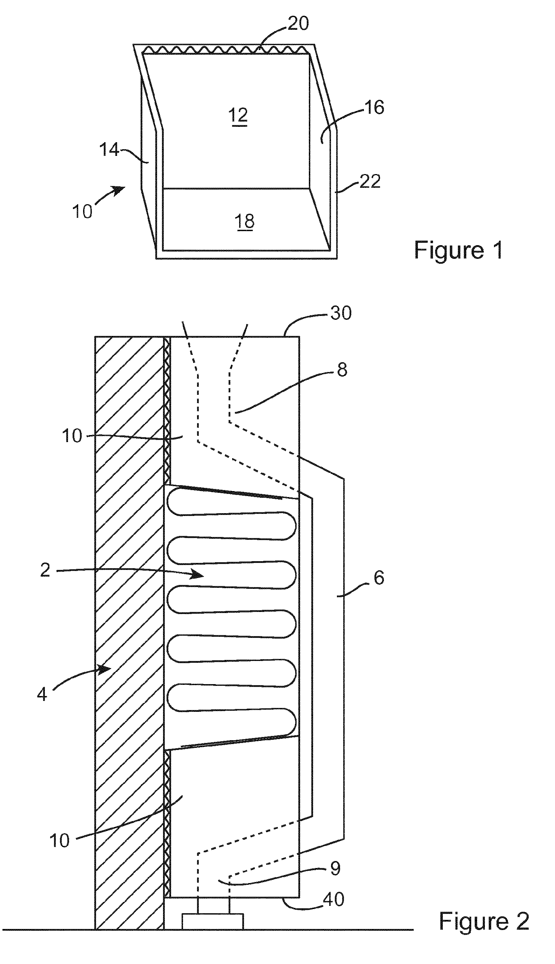

An insulating element 10 in accordance with a first embodiment of the present invention is illustrated in Figures 1 and 2. The insulating element comprises a steel or plastic profile comprising a base member 12, first and second side walls 14,16 and an end wall 18.

The insulating element 10 is adapted to be located within a recess formed at an upper and/or lower region of an insulated panel 2 used to clad an exterior wall 4 of a building, as shown in Figure 2, to allow a down pipe 6 to be aligned with the exiting gutter and gulley, avoiding the need to relocate such items, while preventing cold bridging.

Each side wall 14,16 of the insulating element 10 has a height substantially equal to the thickness of said insulated panel 2.

A relatively thin layer of insulating material 20 is applied to a rear face of the base 12 member of the insulating element 10, such insulating material having a much reduced thickness than the adjacent insulated panel 2. Preferably said insulating material comprises Aerogel or a similar high u value material, providing effective thermal insulation despite its reduced thickness. Similar insulating layers may be provided on the rear faces of the side walls 14,16 and base wall 18, if desired, to further reduce cold bridging.

A respective outwardly extending lip 22 is provided at the distal edges of each of the side and end walls 14,16,18, arranged to overlap the outer face of an adjacent insulated panel 2 to prevent moisture ingress between the insulating element 10 and the insulated panel 2.

A facade (exterior walls) of a building may be clad with thermally insulating panels, each insulated panel comprising a laminated composite structure comprising a core of thermally insulating material, such as PIR, phenolic resin or wood fibre, at least one foil layer defining a vapour control layer and a Magnesium Oxide outer layer to form an external surface of the board. The thickness of the insulating core is determined by the thermal specification required of the wall, typically between 30 and 300mm. The thickness of the outer layer is typically 9mm. In other systems, insulating panels formed from an insulating material, such as PIR, phenolic resin or wood fibres, may be attached to the building facades before being coated with a weatherproof render.

A problem with such known systems is how to deal with existing fitting on the building facade, in particular down pipes for guttering. Such down pipes are typically removed from the wall prior to attaching the insulating panels and are subsequently replaced once the installation of the insulating panels and the application of render, where applicable, is complete. However, this results in the outward displacement of the down pipes, requiring corresponding displacement of the guttering and the gullies into which the down pipes feed. Alternatively regions of the insulating panels adjacent the gullies and the gutter outlets may be cut away to create recesses into which at least end regions of the down pipes may be received. However, such recesses can lead to cold bridging and/or moisture and/or air infiltration.

The insulating element shown in Figure 1 avoids this problem by the insertion of a respective insulating member 10 into a receiving recess cut into the insulating panel 2 adjacent the end regions 8,9 of the down pipe 6 such that the respective insulating element 10 defines a recess within which the down pipe 6 may pass to bring it into alignment with the gutter outlet/gully, the insulated base member 12 of each of the insulating elements preventing cold bridging through such recess. The outer lips 22 of the side walls 14,16 of each insulating element 10 overlie the outer surface of the adjacent insulating panel 2 to prevent moisture ingress between the insulating element 10 and the panel 2.

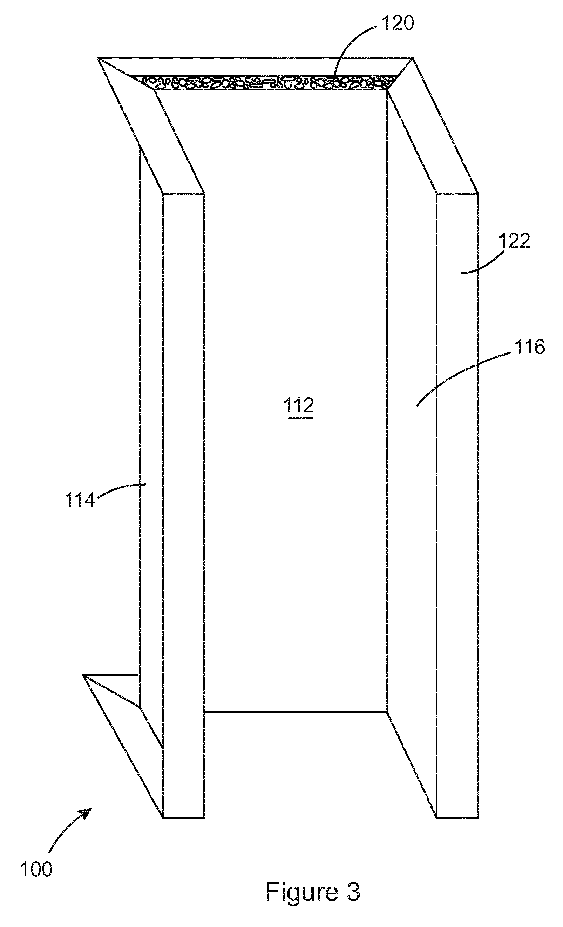

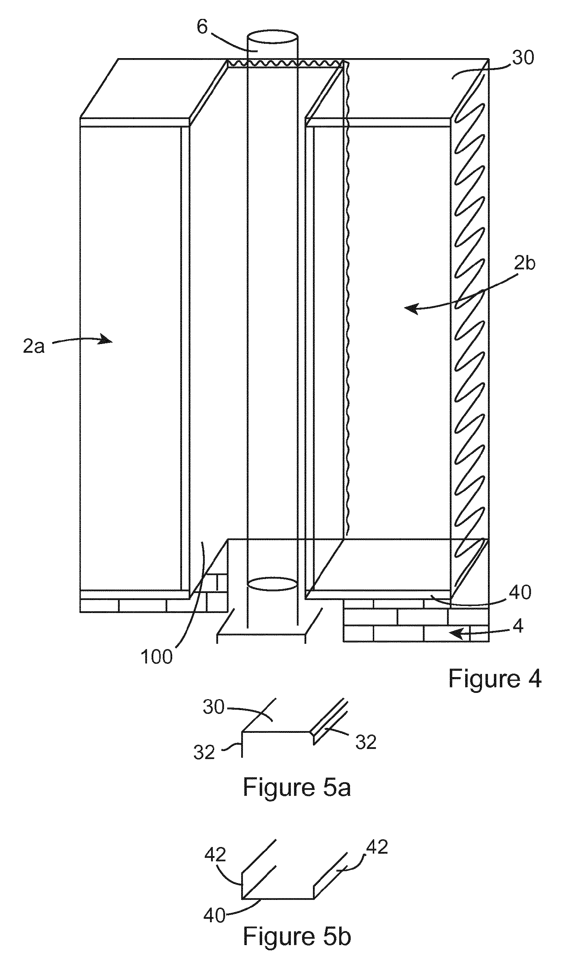

An insulating element 100 in accordance with a second embodiment of the present invention is illustrated in Figures 3 and 4, wherein the insulating element 100 is adapted to define a channel extending over the full height of the wall of the building. The insulating element 100 comprises an elongate base member 112 and opposing first and second walls 114,116 extending outwardly from either side of the base member 112 to define channel therebetween. The base member 112 is provided with a layer 120 of Aerogel or similar high u value insulating material on a rear side thereof. Similar insulating layers may be provided on the rear faces of the side walls 114,116 if desired, to further reduce cold bridging. However, this may not be necessary due to the provision of insulation in the panels 2a,2b on either side of the insulating element 100.

Outwardly extending lips 122 are provided on the distal edges of the side walls 114,116 to overlie the adjacent insulating panels 2a,2b to prevent moisture ingress.

As shown in Figure 4, the insulating element 100 may be inserted into an elongate gap between two adjacent insulating panels 2a,2b of an external insulation system to define a channel into which a down pipe 6 may be located, this enabling the down pipe to remain in-line with the existing guttering/gully. An outer cover member may be detachably fitted over the channel, if desired, to provide a more aesthetic overall appearance.

Upper and lower sides of each insulating panel 2a,2b, in either of the embodiments illustrated above, may be covered by elongate panels 30,40 having respective outer lips 32,42 adapted to overlie the inner and outer faces of the panel to further prevent moisture ingress, the upper panel 30 defining a ridge track or verge trim, as illustrated in Figure 5a, and the lower panel 40 defining a starter track, as illustrated in Figure 5b. Such panels may be provided with a layer of insulating material (not shown), such as Aerogel, to further reduce cold bridging, if desired.

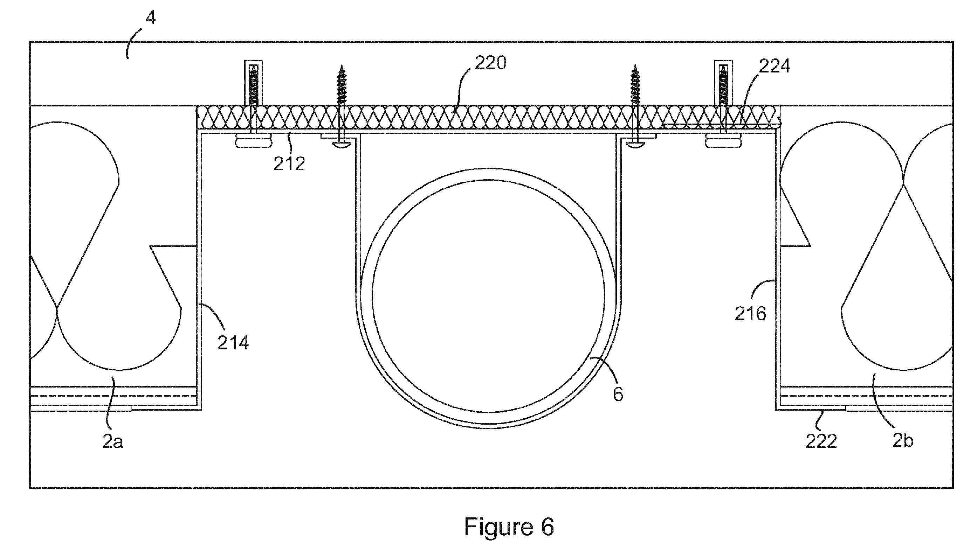

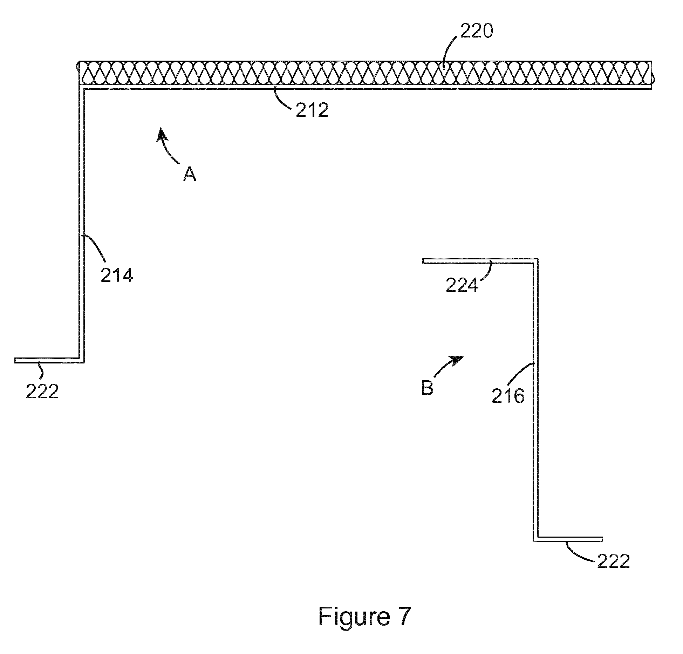

An insulating element 200 in accordance with a further embodiment of the present invention is illustrated in Figures 6 and 7, wherein the element 200 is made from two parts A,B to facilitate installation. A first part A of the element 200 defines the base member 212 of the element, having a layer of Aerogel or a similar high u value material affixed to a rear face thereof, and a first side wall 214 extending perpendicularly from a first side of the base member 212, an outwardly extending lip 222 extending from an outer edge of the first side wall 214. A second part B of the element 200 defines a second side wall 216 of the element 200. The second side wall 216 is also provided with an outwardly extending lip 222 extending from an outer edge thereof. An inwardly facing lip 224 is provided extending from an inner edge of the second side wall 216, extending perpendicular to the side wall 216, said lip 224 being arranged to be located behind the base member 212 of the first part A of the element 200 in overlapping relationship, as shown in Figure 6.

The two part structure of the insulating element 200 enables the element to be installed behind an existing downpipe 6, thus avoiding the need for removal of the downpipe 6 prior to installation of the insulation.

## Claims

1. An insulating element (10;200;200) for insulating building facades comprising a substantially planar base member (12;112;212) and first and second opposing side walls (14,16;114;116;214,216) extending outwardly from the base member (12;112;212), such that the base member and side walls define a recess therebetween for receiving at least a portion of an external wall fitting, such as a down pipe (6), at least said base member (12;112;212) being provided with an insulating layer (20;120;220), wherein said insulating element (10;100;200) can be inserted into a recess or cut-out in an insulating panel (2) or between adjacent insulating panels (2a,2b) in order to provide clearance for said external wall fitting, and wherein an outer lip (22; 122; 222) is provided on a distal edge of each of said first and second side walls adapted to overlie the outer face of an adjacent insulating panel,
**characterised in that** the insulating layer (20; 120; 220) has been applied to the rear face of the base member (12; 112; 212) and **in that** said insulating layer (20;120;220) comprises one of Aerogel, PIR (polyisocyanurate) or phenolic resin.

2. An insulating element as claimed in claim 1, wherein said insulating element is provided with an end wall (18) extending between said first and second side walls (14,16) at one end of said base member (12).

3. An insulating element as claimed in claim 2, wherein said end wall (18) extends at an obtuse angle to the base member (12).

4. An insulating element as claimed in claim 1, wherein said base member (12;112;212) and side walls (14,16;114,116;214,216) of the insulating element define between them an elongate channel within which the external wall fitting may be received.

5. An insulating element as claimed in any preceding claim, wherein said base member (12;112;212) and side walls (14,16;114,116;214,216) of the insulating element are formed from plastic or steel.

6. An insulating element as claimed in claim 5, wherein said base member (12;112;212) and side walls (14,16;114,116;214,216) are formed by means of a moulding or extrusion process.

7. An insulating element as claimed in any preceding claim, wherein at least one of the side walls (14,16;114,116;214,216) is integrally formed with the base member (12;112;212).

8. An insulating element as claimed in any preceding claim formed from two parts (A,B), a first part (A) comprising said base member (212) and one of said side walls (214) and a second part (B) comprising the other of said side walls (216).

9. An insulating element as claimed in claim 8, wherein the second part (B) of the insulating element (200) includes a lip (224) extending substantially perpendicularly from an inner edge of the side wall (216) defined thereby, said lip (224) being arrange to lie behind or in front of the base member (212), in use, in overlapping relationship therewith.

## Patentansprüche

1. Dämmelement (10; 200; 200) zum Dämmen von Gebäudefassaden, umfassend ein im Wesentlichen ebenflächiges Grundelement (12; 112; 212) und eine erste und eine zweite gegenüberliegende Seitenwand (14, 16; 114; 116; 214, 216), die sich von dem Grundelement (12; 112; 212) nach außen erstrecken, so dass das Grundelement und die Seitenwände eine Nische dazwischen definieren, um mindestens einen Abschnitt eines Außenwand-Anbauteils, wie etwa einem Fallrohr (6), aufzunehmen, wobei mindestens das Grundelement (12; 112; 212) mit einer Dämmschicht (20; 120; 220) versehen ist, wobei das Dämmelement (10; 100; 200) in eine Nische oder einen Ausschnitt in einer Dämmplatte (2) oder zwischen benachbarten Dämmplatten (2a, 2b) eingefügt werden kann, um Platz für das Außenwand-Anbauteil vorzusehen, und wobei eine äußere Lippe (22; 122; 222) an einem distalen Rand von jeder der ersten und der zweiten Seitenwand vorgesehen ist, die dazu angepasst ist, über der Außenseite einer benachbarten Dämmplatte zu liegen,
**dadurch gekennzeichnet, dass** die Dämmschicht (20; 120; 220) auf die Rückseite des Grundelements (12; 112; 212) aufgebracht wurde und dadurch, dass die Dämmschicht (20; 120; 220) eines von Aerogel, PIR (Polyisocyanurat) oder Phenolharz umfasst.

2. Dämmelement nach Anspruch 1, wobei das Dämmelement mit einer Stirnwand (18) versehen ist, die sich zwischen der ersten und der zweiten Seitenwand (14, 16) an einem Ende des Grundelements (12) erstreckt.

3. Dämmelement nach Anspruch 2, wobei sich die Stirnwand (18) unter einem stumpfen Winkel zu dem Grundelement (12) erstreckt.

4. Dämmelement nach Anspruch 1, wobei das Grundelement (12; 112; 212) und die Seitenwände (14, 16; 114, 116; 214, 216) des Dämmelements zwischen ihnen eine langgestreckte Rinne definieren, in der das Außenwand-Anbauteil aufgenommen werden kann.

5. Dämmelement nach einem der vorangehenden Ansprüche, wobei das Grundelement (12; 112; 212) und die Seitenwände (14, 16; 114, 116; 214, 216) des Dämmelements aus Kunststoff oder Stahl gebildet sind.

6. Dämmelement nach Anspruch 5, wobei das Grundelement (12; 112; 212) und die Seitenwände (14, 16; 114, 116; 214, 216) Mittels eines Form- oder Extrusionsprozesses gebildet werden.

7. Dämmelement nach einem der vorangehenden Ansprüche, wobei mindestens eine der Seitenwände (14, 16; 114, 116; 214, 216) einstückig mit dem Grundelement (12; 112; 212) gebildet ist.

8. Dämmelement nach einem der vorangehenden Ansprüche, das aus zwei Teilen (A, B) gebildet ist, wobei ein erster Teil (A) das Grundelement (212) und eine der Seitenwände (214) umfasst und ein zweiter Teil (B) die andere der Seitenwände (216) umfasst.

9. Dämmelement nach Anspruch 8, wobei der zweite Teil (B) des Dämmelements (200) eine Lippe (224) umfasst, die sich im Wesentlichen rechtwinklig von einem inneren Rand der dadurch definierten Seitenwand (216) erstreckt, wobei die Lippe (224) dazu angeordnet ist, in Gebrauch, in überlappender Beziehung damit, hinter oder vor dem Grundelement (212) zu liegen.

## Revendications

1. Élément isolant (10 ; 200 ; 200) servant à isoler des façades de bâtiment comportant un élément de base sensiblement plan (12 ; 112 ; 212) et des première et deuxième parois latérales opposées (14, 16 ; 114 ; 116 ; 214, 216) s'étendant vers l'extérieur depuis l'élément de base (12 ; 112 ; 212), de telle sorte que l'élément de base et les parois latérales définissent un retrait entre eux à des fins de réception d'au moins une partie d'un accessoire de paroi externe, tel un tuyau de descente (6), au moins ledit élément de base (12 ; 112 ; 212) comportant une couche isolante (20 ; 120 ; 220), dans lequel ledit élément isolant (10 ; 100 ; 200) peut être inséré dans un retrait ou une découpe dans un panneau isolant (2) ou entre des panneaux isolants adjacents (2a, 2b) afin de fournir le jeu pour ledit accessoire de paroi externe, et dans lequel une lèvre extérieure (22 ; 122 ; 222) est mise en oeuvre sur un bord distal de chacune desdites première et deuxième parois latérales adaptées pour surmonter la face extérieure d'un panneau isolant adjacent,
**caractérisé en ce que** la couche isolante (20 ; 120 ; 220) a été appliquée sur la face arrière de l'élément de base (12 ; 112 ; 212) et **en ce que** ladite couche isolante (20 ; 120 ; 220) comporte l'un parmi un aérogel, un PIR (polyisocyanurate) ou une résine phénolique.

2. Élément isolant selon la revendication 1, dans lequel ledit élément isolant comporte une paroi d'extrémité (18) s'étendant entre lesdites première et deuxième parois latérales (14, 16) au niveau d'une extrémité dudit élément de base (12).

3. Élément isolant selon la revendication 2, dans lequel ladite paroi d'extrémité (18) s'étend selon un angle obtus par rapport à l'élément de base (12).

4. Élément isolant selon la revendication 1, dans lequel ledit élément de base (12 ; 112 ; 212) et les parois latérales (14, 16 ; 114, 116 ; 214, 216) de l'élément isolant définissent entre eux un profilé en U allongé à l'intérieur duquel l'accessoire de paroi externe peut être reçu.

5. Élément isolant selon l'une quelconque des revendications précédentes, dans lequel ledit élément de base (12 ; 112 ; 212) et les parois latérales (14, 16 ; 114, 116 ; 214, 216) de l'élément isolant sont formés à partir de plastique ou d'acier.

6. Élément isolant selon la revendication 5, dans lequel ledit élément de base (12 ; 112 ; 212) et les parois latérales (14, 16 ; 114, 116 ; 214, 216) sont formés au moyen d'un procédé de moulage ou d'extrusion.

7. Élément isolant selon l'une quelconque des revendications précédentes, dans lequel au moins l'une des parois latérales (14, 16 ; 114, 116 ; 214, 216) est formée d'une seule pièce avec l'élément de base (12 ; 112 ; 212).

8. Élément isolant selon l'une quelconque des revendications précédentes, formé à partir de deux parties (A, B), une première partie (A) comportant ledit élément de base (212) et l'une desdites parois latérales (214) et une deuxième partie (B) comportant l'autre desdites parois latérales (216).

9. Élément isolant selon la revendication 8, dans lequel la deuxième partie (B) de l'élément isolant (200) comprend une lèvre (224) s'étendant sensiblement de manière perpendiculaire depuis un bord intérieur de la paroi latérale (216) définie de ce fait, ladite lèvre (224) étant agencée pour reposer derrière ou devant l'élément de base (212), lors de l'utilisation, selon une relation de chevauchement avec celui-ci.
